# EUROPEAN PATENT APPLICATION

(11) **EP 2 628 564 A1**
(43) Date of publication of application: **21.08.2013**
(21) Application number: 11832480.5
(22) Date of filing: 06.10.2011
(51) Int. Cl.: B23K 26/38, B23K 26/073, B23K 26/08

(54) **LASER CUTTING DEVICE AND LASER CUTTING METHOD**

(30) Priority: 15.10.2010 JP 2010232676
(71) Applicant: Mitsubishi Heavy Industries, Ltd., Tokyo 108-8215 (JP)
(72) Inventor: WATANABE, Masao, Tokyo 108-8215 (JP)
(74) Representative: HOFFMANN EITLE
(86) International application number: PCT/JP2011/073103
(87) International publication number: WO 2012/050045

(57) **Abstract**

An object is to obtain a laser cutting device and a laser cutting method with which a thick processing item can be cut by using laser light whose wavelength is shorter than that of CO₂ laser light. With a laser cutting device (10), a laser emitting unit (24) emits a laser beam (YAG-based laser light whose wavelength is shorter than that of CO₂ laser light) for cutting a processing item (30), an optical system (26) focuses the laser beam so that the laser beam has an elliptical cross-sectional shape and so that a long-axis direction of the ellipse is aligned with a direction in which cutting of the processing item (30) progresses, and thus, the elliptically-focused laser beam contributes to raising the temperature of a molten pool inside the processing item (30).

## Description

### {Technical Field}

The present invention relates to a laser cutting device and a laser cutting method.

### {Background Art}

In recent years, there have been advances in the development of laser cutting devices, such as, for example, the device described in Patent Literature 1 in which a processing head for cutting a workpiece formed of a metal plate receives a laser beam from a laser oscillator via an optical fiber, and the workpiece is cut by using the laser beam. This laser with which an optical fiber is used (hereinafter, referred to as a "fiber laser") is a solid-state laser (for example, a YAG-based laser) transmitted by using an optical fiber.
Also, the use of fiber lasers is becoming more widespread because they require a lower amount of electrical energy to generate laser light as compared with a gas laser (for example, CO₂ laser), the quality of the laser beam (beam focusing characteristics and directionality of a laser beam) is greater as compared with a rod-type solid-state laser, and thus, it is possible to increase the output power.

Here, when cutting a metal forming the processing item by using a laser cutting device, in some cases, the processing item is cut by heating the processing item to a high temperature by utilizing not only laser beam power but also the oxidation heat from oxidation of the metal caused by oxygen gas (assist gas) sprayed onto the processing item together with the irradiation of the laser beam. When the processing item reaches a high temperature, the metal forming the processing item and oxidized metal produced in the process of generating the oxidation heat melt and form molten metal. Then, the processing item is cut by removing the molten metal by blowing the molten metal away with the assist gas described above and making the molten metal flow off the processing item by means of the pressure of the assist gas.
The higher the temperature of the molten metal becomes, the more the viscosity of the molten metal decreases and the greater the fluidity of the molten metal becomes; therefore, with a laser cutting device, it is necessary to decrease the viscosity of the molten metal by increasing the cutting temperature of the processing item and to enhance the ease of removing the molten metal by means of the assist gas.

Because of this, when cutting by means of a laser beam, the internal temperature of a processing item, that is, the cutting temperature, must be increased to a high temperature. For example, if the processing item to be cut is Fe (iron), it is necessary to achieve a cutting temperature of about 1200 °C to 1700 °C.

### {Citation List}

### {Patent Literature}

{PTL 1} Japanese Unexamined Patent Application, Publication No. 2008-296266

### {Summary of Invention}

### {Technical Problem}

However, with YAG-based laser light used in a fiber laser or the like, it has been pointed out that it is difficult to raise the temperature during cutting as compared with CO₂ laser light which has conventionally been used.

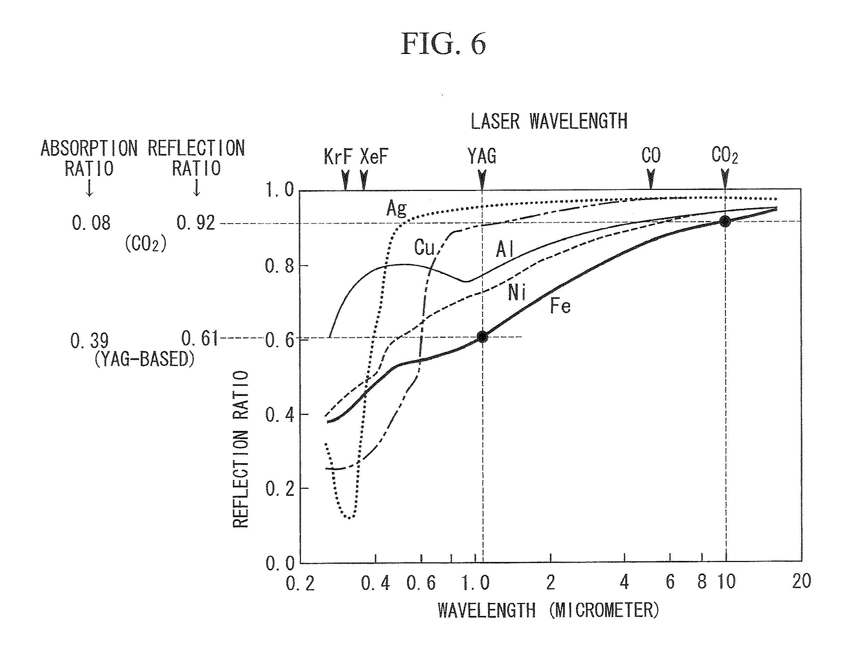

The reasons for this are thought to be as follows.
Because the magnitude of the wavelength differs between the YAG-based laser light and the CO₂ laser light, namely, the wavelength of the YAG-based laser light is 1.06 to 1.08 *µ*m, whereas the wavelength of the CO₂ laser light is 10.6 *µ*m, these laser beams differ in terms of the fraction of laser light absorbed by a material (hereinafter, referred to as "material absorption ratio") and the fraction of laser light absorbed by plasma (hereinafter, referred to as "plasma absorption ratio"). For example, as indicated by the example of a conventionally known experiment shown in Fig. 6, for iron, the material absorption ratio is 0.08 for the CO₂ laser light, whereas it is 0.39 for the YAG-based laser light whose wavelength is shorter than that of the CO₂ laser light.

As described above, because the material absorption ratio is greater for the YAG-based laser light as compared with that for the CO₂ laser light, more laser beam power is consumed for melting a processing item as compared with the CO₂ laser light, and, because of this, it is less likely that the laser beam power contributes to raising the temperature of the processing item. Furthermore, when cutting the processing item, a portion of the metal forming the processing item evaporates, thus forming plasma. Then, although the plasma temperature contributes to raising the internal temperature of the processing item to be cut, the plasma absorption ratio of the YAG-based laser light is about 1/100th as compared with that of the CO₂ laser light. Because of this, it is difficult to raise the plasma temperature inside the processing item to be cut by means of the YAG-based laser light.

In addition, in the case in which the fiber laser is used, the cutting performance of the laser cutting device sometimes deteriorates due to deterioration of the quality and output power of the laser beam due to changes in the refractive index caused by stress occurring at an interface between the cladding and core of the fiber resulting from variability among laser oscillators, degradation of the fiber over time, accumulation and localization of mechanical stress (stress) in the fiber, and so forth.

As a result, with a laser cutting device in which laser light whose wavelength is shorter than that of the CO₂ laser light is used, there is a problem in that, when cutting a thick processing item, the internal temperature of the processing item cannot be raised to a required temperature for cutting, and thus, in some cases, the processing item cannot be cut.

The present invention has been conceived in light of the above-described circumstances, and an object thereof is to provide a laser cutting device and a laser cutting method with which a thick processing item can be cut by using laser light whose wavelength is shorter than that of the CO₂ laser light.

### {Solution to Problem}

In order to solve the above-described problems, a laser cutting device of the present invention employs the following solutions.
Specifically, a laser cutting device according to a first aspect of the present invention includes an emitting unit for emitting a laser beam for cutting a processing item that has a thickness to form a molten pool inside thereof when irradiated with the laser beam, whose wavelength is shorter than that of CO₂ laser light; and a focusing unit for focusing the laser beam so that the laser beam emitted from the emitting unit has an elliptical cross-sectional shape and so that a long-axis direction of the ellipse is aligned with a direction in which cutting of the processing item progresses.

With the first aspect of the present invention, the emitting unit emits the laser beam for cutting the processing item having a thickness for forming a molten pool inside thereof when irradiated with a laser beam whose wavelength is shorter than that of CO₂ laser light, and the focusing unit focuses the laser beam so that the laser beam has an elliptical cross-sectional shape and so that a long-axis direction of the ellipse is aligned with a direction in which cutting of the processing item progresses.

Laser light (for example, a YAG-based laser light) whose wavelength is shorter than that of CO₂ laser light has a high material absorption ratio and a low plasma absorption ratio, and, because of this, when cutting a processing item by using the laser beam, it has been impossible to achieve a high enough temperature inside the processing item such that molten metal thereof has a sufficiently low viscosity to be blown off by means of an assist gas.

Therefore, the laser beam is made to have an elliptical cross-sectional shape, and the long-axis direction of the ellipse is aligned with the direction in which cutting of the processing item progresses. Accordingly, by utilizing the change in the distribution of beam energy from melting the processing item to raising the temperature of the cutting region, the laser beam power at the front side of the processing item in the cutting direction is consumed for melting the metal forming the processing item, whereas the laser beam power at the rear side of the processing item in the cutting direction is consumed for raising the temperature of the molten metal, and thus, the temperature of the molten metal reaches a high temperature. As a result, because the viscosity of the molten metal can be sufficiently decreased for the molten metal to be blown off by means of the assist gas, the present invention is capable of cutting a thick processing item by using laser light whose wavelength is shorter than that of CO₂ laser light.

In addition, with the laser cutting device according to the first aspect of the present invention, the focusing unit may include a cylindrical lens that focuses the laser beam so that the laser beam emitted from the emitting unit has an elliptical cross-sectional shape; and a rotating unit for rotating the cylindrical lens so that a long-axis direction of the laser beam focused by the cylindrical lens is aligned with the direction in which cutting of the processing item progresses.
With the first aspect of the present invention, because the focusing unit includes the cylindrical lens that focuses the laser beam emitted from the emitting unit so as to have an elliptical cross-sectional shape and a rotating unit for rotating the cylindrical lens so that the long-axis direction of the laser beam focused by the cylindrical lens is aligned with the direction in which cutting of the processing item progresses, it is possible, with a simple configuration, to align the long-axis direction of the laser beam with the direction in which cutting of the processing item progresses.

Furthermore, with the laser cutting device according to the first aspect of the present invention, the laser beam may be fiber laser light.
With the first aspect of the present invention, because fiber laser light is a high-quality laser beam having a high output power, a thick processing item can be cut more reliably.

In addition, with the laser cutting device according to the first aspect of the present invention, the laser beam may be disk laser light.
With the first aspect of the present invention, because disk laser light is a high-quality laser beam having a high output power, a thick processing item can be cut more reliably.

On the other hand, in order to solve the above-described problems, a laser cutting method of the present invention employs the following solutions.
Specifically, a laser cutting method according to a second aspect of the present invention includes a first stage of emitting a laser beam for cutting a processing item that has a thickness to form a molten pool inside thereof when irradiated with the laser beam, whose wavelength is shorter than that of CO₂ laser light; and a second stage of focusing the laser beam so that the emitted laser beam has an elliptical cross-sectional shape and so that the long-axis direction of the ellipse is aligned with a direction in which cutting of the processing item progresses, which causes the elliptically-focused laser beam to contribute to raising the temperature of the molten pool.

With the second aspect of the present invention, the laser beam power at the front side of the processing item in the cutting direction is consumed for melting the metal forming the processing item, whereas the laser beam power at the rear side of the processing item in the cutting direction is consumed for raising the temperature of the molten metal, and thus, the temperature of the molten metal reaches a high temperature. As a result, because the viscosity of the molten metal can be sufficiently decreased for the molten metal to be blown off by means of the assist gas, the laser cutting method according the second aspect of the present invention is capable of cutting a thick processing item by using laser light whose wavelength is shorter than that of CO₂ laser light.

### {Advantageous Effects of Invention}

The present invention affords an excellent advantage in that a thick processing item can be cut by using laser light whose wavelength is shorter than that of CO₂ laser light.

### {Brief Description of Drawings}

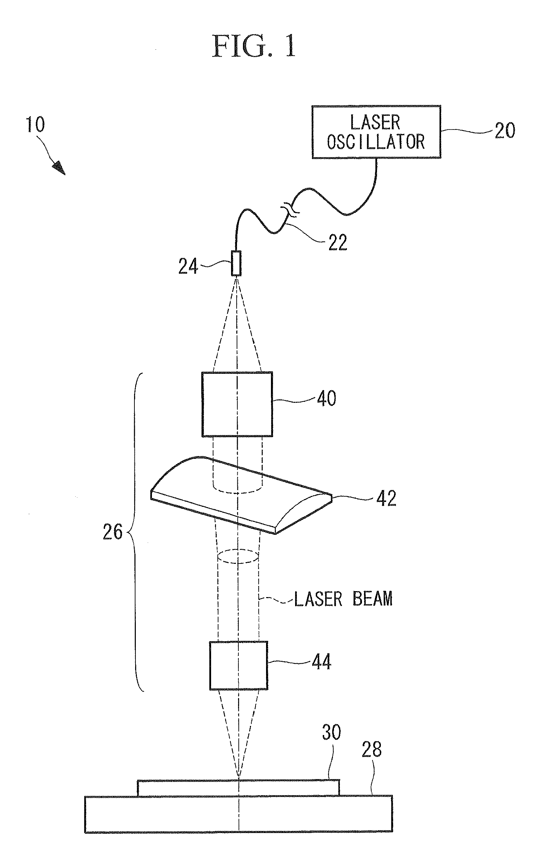

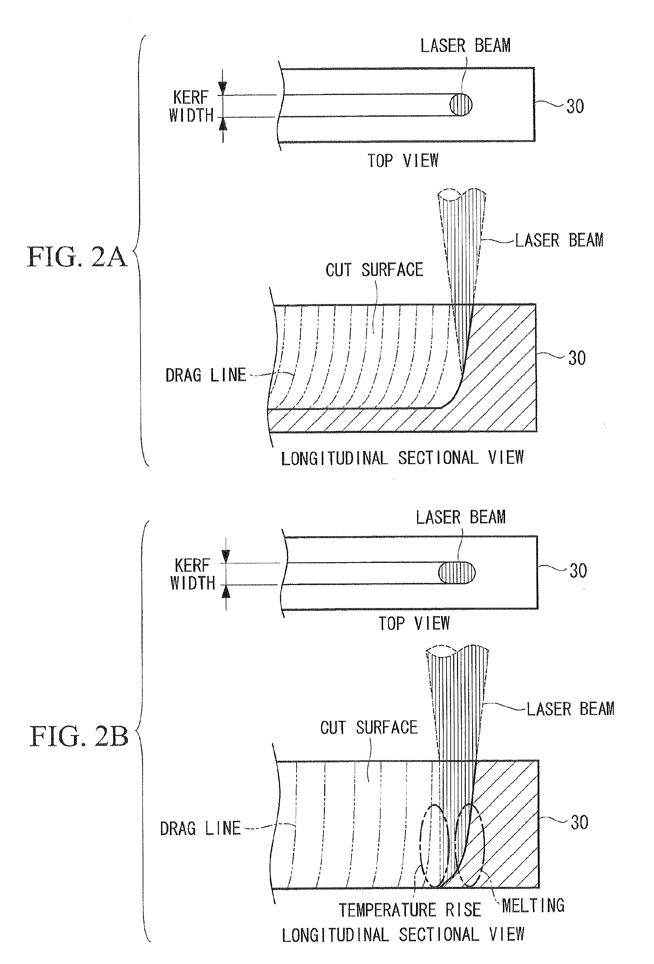

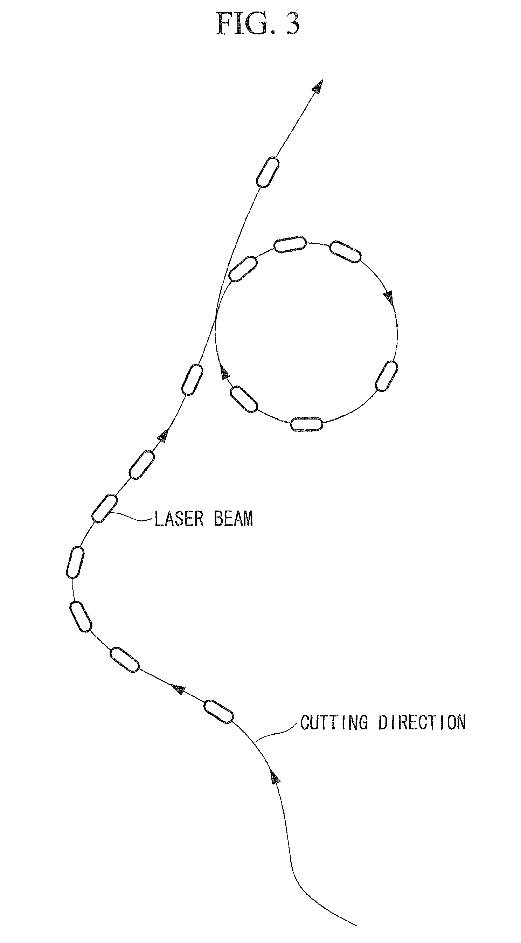

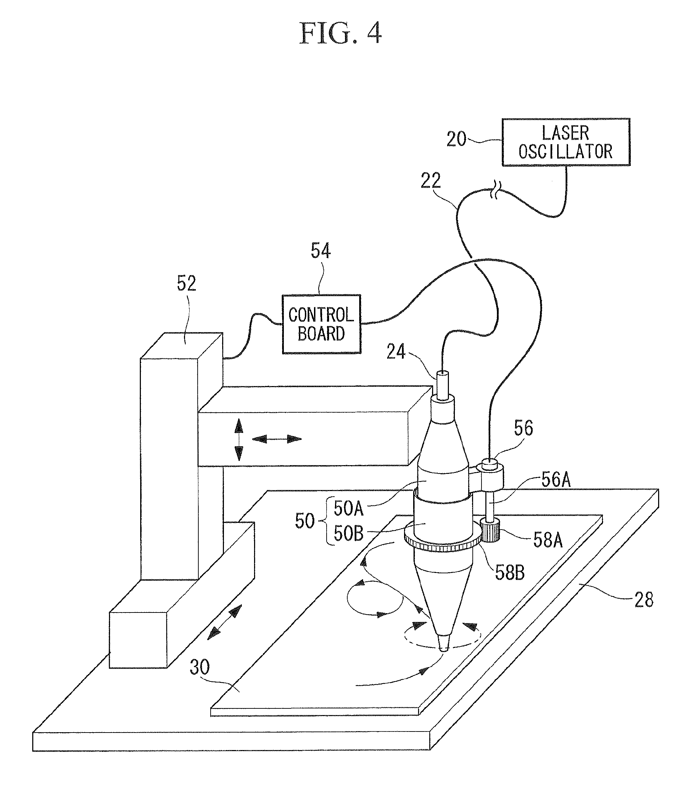

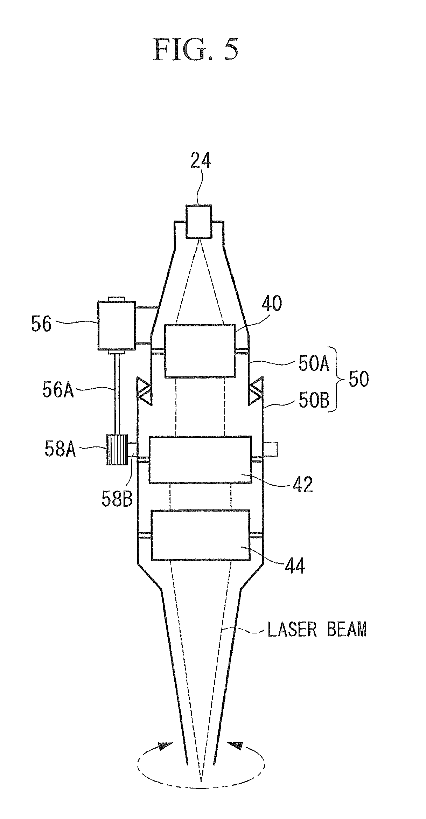

{Fig. 1} Fig. 1 is a schematic diagram showing the configuration of an optical system of a laser cutting device according to an embodiment of the present invention.
{Fig. 2A} Fig. 2A is a schematic diagram showing a cut state of a processing item to be cut by a laser cutting device in which a conventional fiber laser is used.
{Fig. 2B} Fig. 2B is a schematic diagram showing a cut state of a processing item to be cut by the laser cutting device according to the embodiment of the present invention.
{Fig. 3} Fig. 3 is a schematic diagram showing the relationship between the cutting direction and the orientation of a laser beam for the laser cutting device according to the embodiment of the present invention.
{Fig. 4} Fig. 4 is an overall configuration diagram of the laser cutting device according to the embodiment of the present invention.
{Fig. 5} Fig. 5 is a longitudinal sectional view of a cylindrical enclosure of the laser cutting device according to the embodiment of the present invention.
{Fig. 6} Fig. 6 is a graph showing changes in the material absorption ratio in accordance with the wavelength of a laser beam.

### {Description of Embodiment}

An embodiment of a laser cutting device and a laser cutting method according to the present invention will be described below with reference to the drawings.

Fig. 1 shows the configuration of an optical system of a laser cutting device 10 according to this embodiment.
The laser cutting device 10 is provided with a laser oscillator 20, an optical fiber 22, a laser emitting unit 24, and an optical system 26. The laser cutting device 10 according to this embodiment uses a fiber laser for which the optical fiber 22 is used as a transmission medium.

Then, the laser cutting device 10 according to this embodiment cuts a processing item 30 placed on a table 28 by continuously irradiating the processing item 30 with a laser beam. The processing item 30 is a metal, and the processing item 30 in this embodiment is assumed to be iron (Fe) as an example. In addition, the thickness of the processing item 30 is, for example, ten to several tens of millimeters (for example, 50 mm).

The laser oscillator 20 generates laser light (YAG-based laser light in this embodiment), and the generated laser light is transmitted by means of the optical fiber 22 to be emitted toward the optical system 26 from the laser emitting unit 24 provided at the terminal end of the optical fiber 22.

The optical system 26 includes, from the upstream side, a collimating optical system 40, a cylindrical lens system 42, and a focusing optical system 44, and the collimating optical system 40, the cylindrical lens system 42, and the focusing optical system 44 are arranged so that center axes thereof are coaxial.

The collimating optical system 40 is provided with a collimating lens and turns a laser beam emitted from the optical fiber 22, having a predetermined spread (numerical aperture NA = sin θ), into a collimated beam.

The cylindrical lens system 42 is provided with a cylindrical lens and focuses the laser beam that has been turned into the collimated beam by the collimating optical system 40 only in one direction. In other words, the laser beam is focused by the cylindrical lens system 42 so that it has an elliptical cross-sectional shape.

The focusing optical system 44 focuses the laser beam that has been focused by the cylindrical lens system 42 so as to have the elliptical cross-sectional shape into a diameter suitable for cutting the processing item 30 placed on the table 28.

The collimating optical system 40, the cylindrical lens system 42, and the focusing optical system 44 are formed of, for example, fused quartz. In addition, each of the collimating optical system 40, the cylindrical lens system 42, and the focusing optical system 44 may be formed of a single lens or may be formed of a plurality of lenses.

In addition, when cutting the processing item 30, the laser cutting device 10 according to this embodiment cuts it while spraying oxygen gas, which serves as an assist gas, onto a portion to be cut.

Here, Fig. 2A shows a schematic diagram of the processing item 30 cut by a laser cutting device using a conventional fiber laser, and Fig. 2B shows a schematic diagram of the processing item 30 cut by the laser cutting device 10 according to this embodiment.

As shown in the top view in Fig. 2A, with the conventional laser cutting device, the processing item 30 is cut by irradiating the processing item 30 with a laser beam that has a circular cross-sectional shape. The width of the laser beam diameter substantially corresponds to a kerf width (cutting width).

However, when the thickness of the processing item 30 is large (for example, ten to several tens of millimeters (for example, 50 mm)), as shown in the longitudinal sectional view in Fig. 2A, the YAG-based laser light cannot reach the bottom surface of the processing item 30, and the processing item 30 cannot be cut in some cases.

The reason for this is thought to be because the YAG-based laser light has a higher material absorption ratio and a lower plasma absorption ratio as compared with CO₂ laser light.
To give a more specific explanation, because the YAG-based laser light has a high material absorption ratio as compared with CO₂ laser light, more laser beam power is consumed for melting the processing item 30, and it is less likely that the laser beam power contributes to raising the temperature of the processing item 30. Furthermore, when the processing item 30 is cut, a portion of the metal forming the processing item 30 evaporates, forming plasma. Then, although the plasma temperature contributes to raising the internal temperature of the processing item 30 to be cut, it is difficult to raise the plasma temperature inside the processing item 30 to be cut by means of the YAG-based laser light, likely because the plasma absorption ratio of the YAG-based laser light is lower as compared with that of a CO₂ laser light.

As a result, even if the metal forming the processing item 30 and oxidized metal thereof are melted into molten metal, thus forming a molten pool inside the processing item 30, because the laser beam cannot sufficiently raise the temperature of the molten pool, the viscosity of the molten metal is not decreased, which makes it impossible for the assist gas to cause the molten metal to flow out from inside the processing item 30. Because of this, in some cases, the conventional laser cutting device cannot cut a processing item 30 having a thickness for a molten pool to form thereinside.

On the other hand, as shown in the top view in Fig. 2B, with the laser cutting device 10 according to this embodiment, the processing item 30 is irradiated with a laser beam that has an elliptical cross-sectional shape.
When the processing item 30 is irradiated with the laser beam that has an elliptical cross-sectional shape, the laser beam power at the front side of the processing item 30 in the cutting direction is consumed for melting the metal forming the processing item 30. On the other hand, the laser beam power at the rear side of the processing item 30 in the cutting direction can be consumed for raising the temperature of the molten metal.

As a result, because the viscosity of the molten metal is increased and the molten metal can be blown and made to flow out of the processing item 30, by means of the pressure of the assist gas, the laser cutting device 10 can cut the thick processing item 30. Because the molten metal can be blown and made to flow downward when the viscosity of the molten metal is increased, as shown in the longitudinal sectional view in Fig. 2B, a drag line becomes more vertical as compared with the conventional example shown in the longitudinal sectional view in Fig. 2A.

As shown in Fig. 3, in order to cut the thick processing item 30, the laser cutting device 10 according to this embodiment focuses the laser beam so that the long-axis direction of the laser beam aligns with the direction in which cutting of the processing item 30 progresses.

Fig. 4 is an overall configuration diagram of the laser cutting device 10.
The optical system 26 provided in the laser cutting device 10 is accommodated in a cylindrical enclosure 50 in which the laser emitting unit 24 is disposed at the top portion thereof.

The cylindrical enclosure 50 is supported by a three-axis arm 52 that can be moved in three axial directions (xyz axes), and, by driving the three-axis arm 52, the direction in which cutting of the processing item 30 progresses is changed. The movement of the three-axis arm 52 is controlled by a control board 54.

In addition, the cylindrical enclosure 50 according to this embodiment is vertically divided, as shown in the longitudinal sectional view of the cylindrical enclosure 50 in Fig. 5; the laser emitting unit 24 and the collimating optical system 40 are disposed in a top cylindrical enclosure 50A, and the cylindrical lens system 42 and the focusing optical system 44 are disposed in a bottom cylindrical enclosure 50B.

The top cylindrical enclosure 50A is supported by the three-axis arm 52, and the bottom cylindrical enclosure 50B is fitted to the top cylindrical enclosure 50A so as to be coaxially rotatable.

Furthermore, a motor 56 is provided at a side surface of the top cylindrical enclosure 50A.
A rotating shaft 56A of the motor 56 is provided with a direction-correcting gear 58A so as to engage with a gear 58B provided at a side surface of the bottom cylindrical enclosure 508.

Then, the rotation angle of the rotating shaft 56A of the motor 56 is controlled by means of the control board 54 in synchronization with changes in the direction in which cutting of the processing item 30 progresses due to the movement of the three-axis arm 52.
By rotating the bottom cylindrical enclosure 50B, that is, the cylindrical lens system 42, via a gear 58B, which is engaged with the direction-correcting gear 58A, the control board 54 controls the rotation angle of the rotating shaft 56A of the motor 56 so that the direction in which cutting of the processing item 30 progresses is aligned with the long-axis direction of the laser beam.

As has been described above, with the laser cutting device 10 according to this embodiment, a laser beam (in this embodiment, YAG-based laser light whose wavelength is shorter than that of CO₂ laser light) for cutting a processing item is emitted from the laser emitting unit 24, the optical system 26 causes the laser beam to have an elliptical cross-sectional shape and focuses the laser beam so that the long-axis direction of the ellipse is aligned with the direction in which cutting of the processing item progresses, and thus, the elliptically-focused laser beam contributes to raising the molten-pool temperature inside the processing item 30; therefore, the viscosity of the molten metal can sufficiently be decreased to allow blow off the molten metal to be blown off by means of the assist gas, which makes it possible to cut a thick processing item 30 by using laser light whose wavelength is shorter than that of CO₂ laser light.

Although the present invention has been described above by means of the embodiment described above, the technical scope of the present invention is not limited to the scope described in the above-described embodiment. Various alterations or improvements can be incorporated into the above-described embodiment within a range that does not depart from the spirit of the preset invention, and the technical scope of the present invention also encompasses forms in which the alterations or the improvements are incorporated.

For example, although a case in which oxygen gas is used as the assist gas has been described in the embodiment described above, the present invention is not limited thereto, and a form in which another type of gas, such as nitrogen gas, argon gas, or the like, is used as the assist gas may be employed.

In addition, although a case in which the YAG-based laser is used for the laser cutting device 10 has been described in the embodiment described above, the present invention is not limited thereto, and a form in which another type of laser light is used may be employed so long as the wavelength thereof is shorter than that of CO₂ laser light.

Furthermore, although a case in which the fiber laser is used for the laser cutting device has been described in the embodiment described above, the present invention is not limited thereto, and a form in which disk laser light (wavelength of 1.05 to 1.09 *µ*m) is used may be employed.

In addition, although a case in which the direction in which cutting of the processing item 30 progresses is changed by moving the cylindrical enclosure 50 supported by the three-axis arm 52 has been described in the embodiment described above, the present invention is not limited thereto, and it is possible to employ a form in which the direction in which cutting of the processing item 30 progresses is changed by moving the table 28 by making the table 28 on which the processing item 30 is placed movable in the three axial directions, instead of configuring the cylindrical enclosure 50 to be movable. In the case of this form, the rotation angle of the rotating shaft 56A of the motor 56 is controlled by means of the control board 54 in synchronization with the changes in the direction in which cutting of the processing item 30 progresses due to the movement of the table 28.

Furthermore, although a case in which the cylindrical enclosure 50 is supported by the three-axis arm 52 has been described in the embodiment described above, the present invention is not limited thereto, and a form in which the enclosure is supported by a two-axis arm that moves longitudinally (x) and laterally (y) may be employed.

### {Reference Signs List}

- 10: laser cutting device
- 24: laser emitting unit
- 26: optical system
- 30: processing item
- 40: collimating optical system
- 42: cylindrical lens system
- 44: focusing optical system
- 56: motor

## Claims

1. A laser cutting device comprising:
an emitting unit for emitting a laser beam for cutting a processing item that has a thickness to form a molten pool inside thereof when irradiated with a laser beam, whose wavelength is shorter than that of CO₂ laser light; and
a focusing unit for focusing the laser beam so that the laser beam emitted from the emitting unit has an elliptical cross-sectional shape and so that a long-axis direction of the ellipse is aligned with a direction in which cutting of the processing item progresses.

2. The laser cutting device according to Claim 1, wherein the focusing unit includes:
a cylindrical lens that focuses the laser beam so that the laser beam emitted from the emitting unit has an elliptical cross-sectional shape; and
a rotating unit for rotating the cylindrical lens so that a long-axis direction of the laser beam focused by the cylindrical lens is aligned with the direction in which cutting of the processing item progresses.

3. The laser cutting device according to Claim 1 or 2, wherein the laser beam is fiber laser light.

4. The laser cutting device according to Claim 1 or 2, wherein the laser beam is disk laser light.

5. A laser cutting method comprising:
a first stage of emitting a laser beam for cutting a processing item that has a thickness to form a molten pool inside thereof when irradiated with the laser beam, whose wavelength is shorter than that of CO₂ laser light; and
a second stage of focusing the laser beam so that the emitted laser beam has an elliptical cross-sectional shape and so that a long-axis direction of the ellipse is aligned with a direction in which cutting of the processing item progresses, which causes the elliptically-focused laser beam to contribute to raising the temperature of the molten pool.
